# EUROPÄISCHE PATENTSCHRIFT

(11) **EP 2 566 828 B1**
(45) Veröffentlichungstag und Bekanntmachung des Hinweises auf die Patenterteilung: **13.04.2016**
(21) Anmeldenummer: 11738395.0
(22) Anmeldetag: 04.05.2011
(51) Int. Cl.: C01B 13/18, C01F 11/06, C04B 2/12, C04B 2/10

(54) **VERFAHREN ZUR UMWANDLUNG VON CARBONATEN IN OXIDE**
METHOD FOR CONVERTING CARBONATES TO OXIDES
PROCÉDÉ DE TRANSFORMATION DE CARBONATES EN OXYDES

(30) Priorität: 05.05.2010 DE 102010019330
(43) Veröffentlichungstag der Anmeldung: 13.03.2013
(73) Patentinhaber: Fels-Werke GmbH, 38640 Goslar (DE)
(72) Erfinder: STUMPF, Thomas, 38667 Bad Harzburg (DE); MÖLLER, Roland, 38667 Bad Harzburg (DE); BAUMANN, Leonhard, 94501 Aldersbach (DE)
(74) Vertreter: Patentanwälte Olbricht Buchhold Keulertz
(86) Internationale Anmeldenummer: PCT/EP2011/002222
(87) Internationale Veröffentlichungsnummer: WO 2011/138022

(56) Entgegenhaltungen:
- WO-A1-2009/080297
- US-A1- 2009 101 050

## Beschreibung

Die vorliegende Erfindung betrifft ein Verfahren zur Herstellung von Branntkalk oder Magnesia (MgO) unter Umwandlung von Carbonaten in Oxide durch thermische Abspaltung von CO₂ in als Vertikalschachtöfen ausgebildeten Kalzinieröfen, in welchen kohlenstoffhaltige Brennstoffe verbrannt werden, wobei mineralische Ausgangsmaterialien thermisch behandelt werden.

Die zunehmende globale Erwärmung der erdnahen Atmosphäre wird als eine der größten Umweltbedrohungen der Gegenwart angesehen. Als wissenschaftlich anerkannte Ursache gelten zunehmende Emissionen von Kohlendioxid in die Erdatmosphäre, die im Wesentlichen durch menschliches Handeln hervorgerufen werden. Hierzu gehören Rauchgasemissionen aus der Beheizung privater Haushalte und aus Verbrennungsmotoren zum Antrieb von Verkehrsmitteln. Wesentliche Emittenten sind zudem industrielle Prozesse, insbesondere auch fossile Kraftwerke zur Stromerzeugung.

Neben diesen großen Kohlendioxidemittenten, existieren Prozesse mit sehr hohem Energiebedarf, die neben der CO₂-Emission durch Verbrennung fossiler Energieträger, zusätzlich CO₂ als Koppelprodukt erzeugen und somit eine sehr hohe CO₂-Fracht als Mischung aus Rauch- und Prozessgas emittieren, nämlich Kalzinierprozesse, die insbesondere Carbonate durch thermische Abspaltung von CO₂ in Oxide umwandeln. Hierbei werden zumeist fossil beheizte Kalzinieröfen eingesetzt.

Zur Erzeugung der benötigten hohen Temperaturen weisen Kalzinieröfen zumeist Brennerzonen oder Brennerlanzen auf, bei denen es sich um Brennersysteme handeln kann, die mit den unterschiedlichsten fossilen Energieträger, wie beispielsweise Erdgas, Heizöl, oder staubförmigen Kohlenstoffträgern unter Verwendung von Luft als Oxidationsgas betrieben werden können.

Kalzinieröfen werden beispielsweise in sehr großem Maßstab zur Herstellung von Zement, Magnesia (Magnesiumoxid) und für Branntkalk (Calciumoxid) eingesetzt. Neben einigen speziellen Ofentypen werden Drehrohröfen im Zementbereich eingesetzt. Für die Herstellung von Branntkalk haben sich Vertikalschachtöfen durchgesetzt, da sich dieser Ofentyp besonders für die Herstellung von grobstückigem Branntkalk eignet und gegenüber anderen Ofentypen, wie z.B. Drehrohröfen, den Vorteil eines niedrigeren spezifischen Energieeinsatzes, und damit auch eine niedrigere spezifische CO₂-Emission aufweist.

Calciumoxid stellt weltweit einen der wichtigsten Grundstoffe dar, dessen Herstellmenge jährlich auf über 250 Millionen Tonnen geschätzt wird.

Den so genannten Kalkschachtöfen werden als Rohstoff Kalkstein (Calciumcarbonat) in unterschiedlicher Korngröße, jedoch in grobstückiger Form mit Hilfe spezieller Beschickungssysteme am oberen Ende des Ofenschachts über den Deckel zugeführt.

Der Kalkstein durchwandert dann den Ofenschacht von oben nach unten, wobei dieser kontinuierlich durch von unten nach oben strömende Heißgase in der Vorwärmzone erwärmt wird. Diese Heißgase werden in der Regel durch direkte Befeuerung der Ofenschüttung mit fossilen Brennstoffen in einer oder mehreren Brennerzonen erzeugt. In der Brennerzone bzw. in der Nähe der Brennerlanzen wird der Kalkstein bis in den Kern der Partikel auf ca. 900 bis 1200 °C erwärmt. Dadurch findet eine thermische Spaltung des Calciumcarbonats statt, wodurch Kohlendioxid abgespalten wird, das dann gemeinsam mit den Heißgasen die Ofenschüttung nach oben durchströmt. Man spricht hier auch von einer thermischen Entsäuerung, aus der als fester Rückstand Branntkalk resultiert. Der Branntkalk wird nach dem Durchwandern der Brennerzone im unteren Ofenschachtbereich durch entgegenströmende Verbrennungsluft, die am Schachtboden eindosiert wird, abgekühlt, über die Entnahmevorrichtung aus dem Ofenschacht entlassen und anschließend durch Siebung in definierte Korngrößenfraktionen überführt.

Das als Koppelprodukt entstehende Kohlendioxid vermischt sich mit den Heißgasen aus der Direktbefeuerung und verlässt den Ofenschacht über eine oder mehrere Gasaustrittsöffnungen im oberen Ofenschachtbereich, wobei das Gas anschließend über Filteranlagen von mitgerissenem Staub befreit und üblicherweise als Rauchgas in die Atmosphäre abgegeben wird. Kalkschachtöfen werden in der Regel mit Luft als Oxidationsgas betrieben und weisen im Rauchgas einen Kohlendioxidgehalt von maximal 28 Vol% auf. Durch die in der Regel fehlende Rauchgasreinigung können dem Schüttgut in Kalkschachtöfen nur bedingt Brennstoffe zugemischt werden, die einen hohen Anteil flüchtiger organischer Verbindungen, wie z.B. im Falle von Anthrazit, aufweisen, da diese vor der Nutzung in der Brennerzone ausgetrieben und zusammen mit dem Rauchgas emittiert werden.

Das geschilderte thermische Verfahren ist sehr energieintensiv, da für die Branntkalkproduktion bis zu 4,9 GJ thermische Energie pro Tonne hergestelltem Branntkalk erforderlich sind. Das bedeutet, dass für die Beheizung der Kalzinierschachtöfen sehr große spezifische Einsatzmengen fossiler Brennstoffe erforderlich sind, die zusammen mit dem entstehenden CO₂ aus der thermischen Entsäuerung des Calziumcarbonats zu einer erheblichen CO₂-Emission führen (siehe nachfolgende Tabelle 1)

**Tabelle1**

| Fossiler Brennstoff | Bedarf fossiler Brennstoff | Gesamte CO2-Emission aus fossiler Verbrennung und thermischer Entsäuerung |
|---|---|---|
| | [t/t CaO] | [t/t CaO] |
| Schweres Heizöl | 0,11 | 1,13 |
| Anthrazit | 0,14 | 1,21 |
| Koks | 0,16 | 1,21 |
| Erdgas | 0,092 | 1,01 |

In der Vergangenheit wurden große Anstrengungen unternommen, den spezifischen Energieverbrauch des Kalkbrennprozesses und damit auch die CO₂-Emission zu senken. Durch verschiedene technische Weiterentwicklungen von Kalkschachtöfen konnte der spezifische Energieeinsatz optimiert werden. Das betrifft beispielsweise Energierückgewinnung durch optimierte Verbrennungsluftführung oder besondere Schachtkonstruktionen zur optimierten Energieverteilung. Weiterhin wurde auch eine neue Generation von Parallelschachtöfen entwickelt, in denen die Abwärme des Brennvorgangs in einem der Ofenschächte für die Vorwärmung des Kalksteins im zweiten Ofenschacht genutzt werden kann und dieser Prozess alternierend in den beiden Ofenschächten stattfindet.

Durch diesen technischen Fortschritt konnte der spezifische Energieeinsatz durch optimierte Ofentechnologie zwar beträchtlich gesenkt werden. Der Prozess weist aber unter anderem auch bedingt durch den Einsatz von Luft als Oxidationsgas naturgemäß einen Mindestenergiebedarf auf, der in optimal arbeitenden Schachtofenanlagen etwa im Bereich von 3,5 GJ pro Tonne hergestelltem Branntkalk liegt und nur noch unwesentlich beeinflusst werden kann. Dadurch ist auch die spezifische CO₂-Emission bei ca. 1 Tonne pro Tonne hergestelltem Branntkalk (am Beispiel von Anthrazit) an einem aktuell technisch machbaren Minimum angekommen.

Der wesentliche Nachteil bei Einsatz von Luft als Oxidationsgas besteht darin, dass zur Einstellung des notwendigen Brennstoffgemisches eine Mindestluftmenge eingebracht werden muss, die eine derart hohe Stickstofffracht beinhaltet, dass die resultierende Heißgasmenge und damit die Gasbelastung des Kalzinierofens insgesamt sehr groß wird. Dies führt u.a. zu einem Energieüberschuss in der Vorwärmzone des Kalzinierofens, da die hohe Heißgasmenge aus der Brennzone ihren Energieinhalt nicht vollständig an den Kalkstein abgeben kann und somit mit erhöhter Abgastemperatur aus dem Brennprozess in die Atmosphäre entweicht und zu entsprechenden Energieverlusten führt. Je nach Ofentyp können die Abgastemperaturen bis zu 400 °C betragen. Ein weiterer wesentlicher Nachteil besteht darin, dass solche erhöhte Abgastemperaturen bei ungünstigen Prozessbedingungen und insbesondere bei Einsatz von festen Brennstoffen im Schüttgut auch zu Emissionen von Schadstoffen durch thermische Abspaltung flüchtiger organischer Bestandteile führen können. In solchen Fällen kann es erforderlich dein, das schadstoffbeladene Abgas des Brennprozesses über eine Abgas-Nachverbrennung zu führen.

Der Einsatz von Luft führt somit neben den oben beschriebenen Energieverlusten zwangsläufig zu einer starken Verdünnung des Kohlendioxidanteils im Abgas von Brennprozessen. Um diesen Kohlendioxidanteil in konzentrierter Form für eine nachhaltige Speicherung zu erhalten, müssen daher analog zu CO₂-freien Kraftwerken technisch und energetisch aufwendige Verfahren zur Isolierung des Kohlendioxids eingesetzt werden, wie z. B. die Ad-bzw. Absorption von CO₂ aus Rauchgasen mittels Wäschesystemen (siehe z. B. DE 697 26 039 T2, DE 695 03 036 T2 oder DE 10 2005 050 385 A1), die Anreicherung von CO₂ aus Rauchgasen über Membrantechnologien (siehe z. B. der DE 699 10 441 T2) oder das Ausfrieren von CO₂ aus Rauchgasen (DE 199 40 371 A1). Weitere Verfahren sind das Einspeichern von CO₂ in der Tiefsee (DE 691 04 274 T2 oder DE 696 10 231 T2) oder der Erdkruste (EP 1 571 105 A2) oder die unterirdische Umwandlung von CO₂ in Methan durch bakterielle Konversion (EP 0 963 780 A1).

Ein weiterer Nachteil des Standes der Technik besteht darin, dass die in der Luft vorhandene große Stickstofffracht zu einer hohen Gasbelastung in der Schüttung des Kalzinierofens und dadurch zu einem erhöhten Druckverlust führt, der einen sehr großen Energieaufwand für die Förderaggregate zur Einbringung von Verbrennungsluft und Kühlluft erfordert. Weiterhin führt dieser Nachteil zu einer Limitierung der Korngrössen des Brenngutes, da die hohen Gaslasten in der Schüttung lediglich relativ grobe Korngrössen zulassen, die noch ausreichendes Lückenvolumen und damit eine ausreichende Gasdurchlässigkeit in der Schüttung ermöglichen.

Diese Limitierung führt in Kalkwerken mit Kalzinierschachtöfen oftmals zum Anfall von unterkörnigem Kalkstein, der nicht in hochwertigen Branntkalk überführt werden kann und in minderwertige Anwendungen abgesteuert werden muss. Dies macht es besonders schwer, dem.Nachhaltigkeitsgebot bei der Nutzung elementarer Grundstoffe Rechnung zu tragen.

Die extrem hohen Strömungsgeschwindigkeiten in der Schüttung führen zudem zu einem Austrag sehr großer Feingutfrachten über das Abgas, die aufwendig in entsprechend groß dimensionierten, nachgeschalteten Filteranlagen abgetrennt werden müssen.

Insgesamt lässt sich feststellen, dass Luft als Oxidationsgas zwar wirtschaftlich zugänglich ist, jedoch durch die hohe Stickstofflast zu erheblichen Nachteilen im Brennprozess führt und zudem eine Aufkonzentrierung von Kohlendioxid im Abgas erschwert.

Eine möglicherweise naheliegende Lösung könnte im Einsatz von technischem Sauerstoff oder mit technischem Sauerstoff angereicherter Luft als Oxidationsgas bestehen. Ein Nachteil bei der Verwendung von technischem Sauerstoff besteht jedoch grundsätzlich darin, dass dieser aus der Luft durch physikalische Trennverfahren, beispielsweise durch klassische destillative Luftzerlegung oder durch Druckwechseladsorption in reiner Form gewonnen werden muss. Beide Verfahren erfordern zusätzlichen Aufwand an elektrischer Energie, wodurch wiederum zusätzlich CO₂ emittiert wird.

Der Einsatz von technischem Sauerstoff ist zudem lediglich im Fall von sehr hoch schmelzenden mineralischen Einsatzmaterialien möglich und beispielsweise in Sinterprozessen auch zur Erreichung der notwendigen Prozesstemperaturen notwendig.

Bei Einsatz von Kalkstein zur Herstellung von Branntkalk führt die Verwendung von technischem Sauerstoff jedoch zu derart hohen Flammtemperaturen in der Brennzone, dass der entstehende Branntkalk anschmilzt und zu Versinterungen im Schüttgut führt. Weiterhin ist der Sauerstoffbedarf nicht ausreichend, um eine effiziente Kühlung des Schüttgutes in der Kühlzone bzw. eine effiziente Vorwärmung in der Vorwärmzone des Kalzinierofens zu gewährleisten, da der sonst in der Verbrennungsluft vorhandene Stickstoffanteil in diesem Fall als Wärmetransportträger fehlt.

Grundsätzlich stellt das dort vorgeschlagene Verfahren jedoch eine geeignete Technologie dar, mit der die CO₂-Bilanz von Brennprozessen nachhaltig verbessert werden könnte.

Die DE 43 24 111 A1 und die DE 32 09 836 C2 beschreiben Verfahren zum Brennen mineralogischer Verbindungen in Schachtöfen.

Die WO 2009/080297A1 beschreibt ein Verfahren auf Basis von Pyrolyse zur Wiederaufbereitung von CO₂-haltigen Abgasen.

Die US 2009/0101050 A1 beschreibt ein Verfahren zur Branntkalkherstellung, bei welchem CO₂ zum Temperieren eingesetzt wird.

Für die Erfindung hat sich daher die Aufgabe gestellt, ein Verfahren bereitzustellen, das die bekannten Nachteile des Herstellungsprozesses von Branntkalk vermindert, und dabei eine günstige Energiebilanz bei minimierter CO₂-Emission aufweist.

Diese Aufgabe wird erfindungsgemäß gelöst durch ein Verfahren, bei welchem im Brennstoffgemisch technischer Sauerstoff oder durch technischen Sauerstoff angereichte Luft als Oxidationsmitteln eingesetzt wird und das bei der Verbrennung in einer Brennzone entstehende, CO₂ enthaltende Abgas wenigstens teilweise als Kühlgas in eine Kühlzone unterhalb der Brennzone am unteren Ende des Vertikalschachtofens eingeleitet wird und vorzugsweise wenigstens teilweise als Verdünnungsgas in das Brennstoffgemisch zurückgeführt wird.

Bei der Durchführung des erfindungsgemäßen Verfahrens hat sich überraschend herausgestellt, dass sich der Brennprozess durch den Einsatz von CO₂ als Verdünnungs- und/oder Kühlgas wesentlich besser steuern und erheblich energieeffizienter als im Luftbetrieb realisieren lässt. Dies ist vor allem bedingt durch die wesentlich höhere volumenspezifische Wärmekapazität von CO₂ gegenüber Stickstoff (bzw. gegenüber Luft, die im Wesentlichen aus Stickstoff besteht). Dies wird durch die nachstehende Tabelle (siehe Tabelle 2) verdeutlicht:

**Tabelle 2**

| **1** | **2** | **3** | **4** | **5** | **6** |
|---|---|---|---|---|---|
| **Gas-Temp. [°C]** | **Gas** | **C_{P} [kj/kg*K]** | **C_{P} [kj/mol]** | **C_{P} [kj/m³]** | **Faktor [C_{P} (CO₂) in kj/m³ / C_{P} (N₂) in kj/m3]** |
| 0 °C | CO2 | 0,815 | 0,036 | 1,601 | 2,551 |
| | Luft | 1,004 | 0,014 | 0,628 | |
| 500 °C | CO2 | 1,155 | 0,051 | 2,269 | 3,324 |
| | Luft | 1,092 | 0,015 | 0,683 | |
| 1000 °C | CO2 | 1,290 | 0,057 | 2,534 | 3,424 |
| | Luft | 1,184 | 0,017 | 0,740 | |

Demnach weist CO₂ je nach Temperatur eine über dreifach höhere spezifische Wärmekapazität pro Volumeneinheit gegenüber Stickstoff auf (siehe Tabelle 2 Spalten 5 und 6). Das bedeutet, dass der Brennprozess sowohl in der Kühlzone, als auch in der Brenn- und Vorwärmzone lediglich ca. ein Drittel des Gasvolumens für die jeweiligen Wärmetransportaufgaben benötigt, als dies im Standardbetrieb unter Verwendung von Luft der Fall ist!

Dadurch ergeben sich signifikante Vorteile im Brennprozess und dessen Energiebilanz sowie Emissionsverhalten, die nachfolgend dargestellt werden:
a) Durch wesentlich geringere Gasbelastung in der Schüttung ergeben sich dementsprechend kleinere Druckverluste. Diese lassen dann erstmals auch eine wirtschaftliche Kalzinierung auch feinerer Kornfraktionen in Schachtöfen zu. Damit kann ein wesentlicher Beitrag zum Nachhaltigkeitsgebot geleistet werden.
b) Im Lückenvolumen der Schüttung herrschen deutlich niedrigere Gasgeschwindigkeiten, was zu einem reduzierten Austrag von Feingut über das Abgas in die nachgeschalteten Abgasfilter führt.
c) Aufgrund der stark reduzierten Abgasmenge kann die gesamte Dimensionierung des Abgas- Filter- und Saugzugsystems wesentlich kleiner dimensioniert werden. Weiterhin können Filter-Verbrauchsmaterialien und Filter-Abreinigungsintervalle sowie ggf. Entsorgungsaufwendungen für Filterstäube eingespart werden.
d) Die gesamte technische Peripherie für die Verdichtung und Dosierung von Verbrennungs- und Kühlluft kann gänzlich entfallen und wird gleichzeitig durch das Abgas-Saugzuggebläse übernommen.
e) Die Energiebilanz des Brennprozesses wird dadurch verbessert, dass wesentlich geringere elektrische Antriebsleistungen für das Einbringen und den Abzug des Abgases des Brennprozesses aufgewendet werden müssen. Weiterhin können die Abgasmenge, sowie die Abgastemperatur auf das absolute physikalische Minimum reduziert werden. Dadurch geht erheblich weniger Energie über die fühlbare Wärme des Abgases verloren.
f) Das Abgas des Brennprozesses, wird nicht mehr in die Atmosphäre emittiert. Dadurch werden auch die sonst im Abgas in geringen Konzentrationen enthaltenen Schadstoffe wie beispielsweise Stickoxide (NOₓ) und Kohlenmonoxid (CO) nicht mehr in die Umwelt abgegeben.

Der Einsatz von technischem Sauerstoff als Oxidationsgas in Brennprozessen ist grundsätzlich Stand der Technik und kann ohne Probleme unter Einhaltung der gesetzlichen Vorschriften und unter Berücksichtigung notwendiger Randbedingungen zur Einhaltung von Arbeits- und Anlagensicherheit in Kalzinieröfen realisiert werden.

Eine mögliche Verwendung besteht in der thermischen Verwertung des Abgases als Vergasungsmittel in Vergasungsprozessen unter Ausnutzung der Boudouard-Reaktion sowie unter reduktiven Bedingungen in Gegenwart von Kohlenstoffträgern und Temperaturen oberhalb 600 °C.
Eine besonders bevorzugte Ausführungsform des Verfahrens besteht im Einsatz des Abgases als Vergasungsmittel in einer Vergasung in einem Gegenstrom-Wanderbett-Vergaser mit Feststoffmassenstrom.

Der Einsatz als Vergasungsmittel ist weiterhin auch in großtechnisch etablierten thermischen Verfahren möglich. So könnte beispielsweise das Abgas in die Reduktionszone von geschlossenen Elektroniederschachtöfen eingesetzt werden, beispielsweise parallel zur Herstellung von Calciumcarbid aus Kohlenstoff und Branntkalk, wobei die ohnehin stattfindende Bildung von Synthesegas durch parallele Umwandlung des Abgases mit Kohlenstoff unter Ausnutzung der Abwärme des Elektroniederschachtofens signifikant erhöht werden kann.

Ein ähnliches Verwendungsfeld bietet der Einsatz des Abgases als Vergasungsmittel in Reduktionszonen von Hochöfen, wo ebenfalls durch Boudouardreaktion eine Umwandlung in Gegenwart von Kohlenstoff zu Synthesegas, parallel zur Herstellung von Roheisen, realisiert werden kann.

Eine weitere Nutzung des Abgases besteht in der Verwendung als Ausgangsstoff für Bioreaktoren, in denen CO₂-reiche Gase über Photosynthese in Sauerstoff umgewandelt werden.
In diesem Zusammenhang gewinnen Technologien zur Nutzung von Algenreaktoren zunehmend an Bedeutung. Diese Algenreaktoren nutzen schnellwachsende Algen in wässrigem Medium, welches von CO₂-haltigen Gasen in feinverteilter Form, meist in langen Röhren von unten nach oben durchströmt wird. Hierbei wird das CO₂ durch Photosynthese ganz oder teilweise wieder in Sauerstoff umgewandelt, während die Algen gleichzeitig infolge beschleunigten Wachstums an Masse stark zunehmen. Zur Aufrechterhaltung, bzw. Beschleunigung der Photosynthese wird das dafür notwendige UV-Licht meist durch Bündelung von Sonnenlicht und Zuleitung mittels Lichtleitersysteme in den Reaktoren bereitgestellt. Eine weitere Möglichkeit besteht in der Zuführung von künstlich erzeugtem UV-Licht.
Die Abgase aus dem erfindungsgemäßen Verfahren eigen sich besonders für den Einsatz in solchen Bioreaktoren, da diese das CO₂ in konzentrierter Form bereitstellen können. Zusätzlich kann die Temperatur des Abgases gezielt so eingestellt werden, dass die fühlbare Restwärme des Abgases im Bioreaktor eine für die Photosynthese und das Algenwachstum ideale Temperatur gewährleistet, ohne dass hierfür weitere Energie aufgewendet werden müsste.
Die sich stark vermehrenden Algen werden dem Algenreaktor kontinuierlich oder batchweise entnommen. Nach zumindest teilweiser Abtrennung des Restwassers, beispielsweise durch Filtration und/oder Trocknung, können diese Algen als Biomasse in der bereits oben beschriebenen Vergasung in einem Gegenstrom-Wanderbett-Vergaser mit Feststoffmassenstrom eingesetzt werden.

Weiterhin kann das Abgas auch als Rohstoff für die Herstellung von Feinstkalken, so genannten PCC-Kalken eingesetzt werden. Hierbei wird üblicherweise Abgas aus Kalkbrennprozessen, die mit Luft betrieben werden, mit vorgelegter Kalkmilch (Calciumhydroxyd) zur Reaktion gebracht. Durch Neutralisation entsteht Calciumcarbonat, das aufgrund seiner Schwerlöslichkeit in feiner Form ausfällt. Der Einsatz des Abgases aus dem erfindungsgemäßen Verfahren ist für diese Anwendung sehr vorteilhaft, da das Verfahren zur Feinstkalkfällung aufgrund des niedrigeren Gasstromes und des nicht vorhandenen Stickstoffs erheblich einfacher gestaltet werden kann.

Bei der großtechnischen Herstellung von chemischen Grundstoffen, wie beispielsweise Pottasche (Kaliumcarbonat), Soda (Natriumcarbonat) und Cyanamid werden CO₂-haltige Rauchgase als Rohstoff eingesetzt, wobei das darin enthaltene CO₂ als Reaktionspartner im Falle von Pottasche und Soda zur Neutralisation zur Bildung der jeweiligen Carbonate aus Kaliumhydroxyd bzw. Natriumhydroxyd dient. Bei all diesen Verfahren erweist sich der Einsatz von Rauchgasen als problematisch, da diese wie bereits oben erläutert, erhebliche Stickstoffanteile aufweisen, die zu einer hohen Gasbelastung in den jeweiligen Reaktoren und hohen Abgasmengen führen. Weiterhin muss für die Förderung/Verdichtung ein erheblicher Energieaufwand in Kauf genommen werden. Dies kann durch den Einsatz des Abgases aus dem erfindungsgemäßen Verfahren vermieden werden. Weiterhin können die genannten Verfahren dadurch erheblich wirtschaftlicher dargestellt werden

Weiterhin kann das Abgas durch Verdichtung auf oberhalb von 73,7 bar(ü) und 31,0 °C in den überkritischen Zustand überführt werden. Überkritisches CO₂ kann aus dem Abgas des erfindungsgemäßen Verfahrens aufgrund der hohen Reinheit und der nicht vorhanden Stickstofffracht, mit relativ geringem Energieaufwand erzeugt werden. CO₂ im überkritischen Zustand wird großtechnisch als Extraktionsmittel und Lösungsmittel, insbesondere im Naturstoffbereich eingesetzt.

Schließlich kann das Abgas auch verflüssigt und mittels der bereits beschriebenen Verfahren emissionsfrei in der Erdkruste oder in der Tiefsee eingespeichert werden.

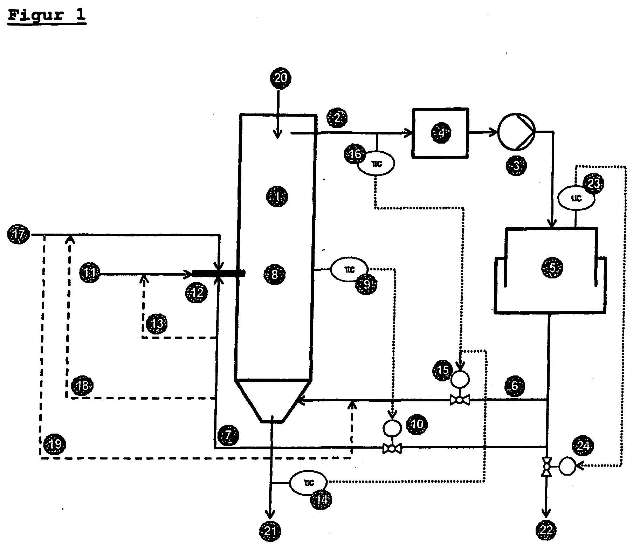

Nachfolgend wird anhand der beigefügten Zeichnung näher auf ein Ausführungsbeispiel der Erfindung eingegangen.

Hierbei wird so vorgegangen, dass in einem Kalzinierschachtofen 1 erzeugtes Abgas 2, im Wesentlichen enthaltend CO₂ und Wasserdampf nach dem Verlassen des Kalzinierschachtofens 1 vorzugsweise mittels eines Saugzuggebläses 3 abgesaugt und zur Abtrennung der Staubanteile über eine Filtereinheit 4 geführt wird. Dies wird vorzugsweise bei einer Gastemperatur oberhalb von 100 °C durchgeführt, um das Erreichen des Taupunktes und dadurch auskondensierendes Wasser in der Filtereinheit zu vermeiden. Die gezeigte besonders bevorzugte Ausführungsform des Verfahrens sieht vor, dass die Druckseite des Saugzuggebläses 3 korrespondierend mit einem Gasspeicherbehälter 5 und mit den Zuführungsleitungen für Kühlgas 6 und das Verdünnungsgas 7 verbunden ist. Der Betriebsdruck des Saugzuggebläses 3 bestimmt damit auch den Betriebsdruck des Gasspeicherbehälters 5 und den Vordruck in den Zuführungsleitungen.

Die Rückführungsmenge von Abgas als Verdünnungsgas in die Brennzone 8 wird vorzugsweise über die Temperatur 9 in der Brennzone geregelt, indem das Regelventil 10 eine entsprechende Abgasmenge in die Brennzone leitet. Dies geschieht vorzugsweise, indem das Verdünnungsgas vor Eintritt in die Brennzone mit dem Brennstoff 11 vor Eintritt in die Brennerlanzen 12, oder in den Brennerlanzen 12, gemischt wird. Im Fall von festen oder flüssigen Brennstoffen kann das Verdünnungsgas auch als Transportgas bzw. als Verdüsungsgas für den Brennstoff genutzt werden 13.

Die Rückführungsmenge von Abgas als Kühlgas in die Kühlzone des Kalzinierofens erfolgt bevorzugt geregelt über die Temperatur des den Kalzinierofens im unteren Teil verlassenden Kalzinates 14, indem das Regelventil 15 die entsprechende Menge in die Kühlzone leitet.
Eine besonders bevorzugte Ausführungsform des Verfahrens sieht darüber hinaus vor, dass die Kühlgasmenge je nach gewünschter Abgastemperatur 16 des Brennprozesses geregelt über den Kühlgasbedarf hinaus erhöht werden kann, indem das Regelventil 15 eine entsprechend erhöhte Menge in die Kühlzone leitet. Dadurch kann die Abgastemperatur 16, welche als Regelgröße dient, gezielt oberhalb des Taupunktes eingestellt und konstant gehalten werden.

Die Dosierung des technischen Sauerstoffs als Oxidationsgas 17 erfolgt vorzugsweise über die Brennerlanzen 12. Hierbei kann das Oxidationsgas vor Eintritt in die Brennerlanzen auch mit dem Verdünnungsgas vermischt werden 18.
Je nach Prozessführung bzw. Typ des verwendeten Kalzinierofens kann das Oxidationsgas auch ganz oder teilweise in Abmischung mit dem Kühlgas in die Kühlzone dosiert werden 19.

Die Dosierung des mineralischen Ausgangsmaterials, im Falle des Kalkbrennprozesses Kalkstein 20, erfolgt am 0-fenkopf. Das erhaltene Kalzinat 21 wird am Ofenboden entnommen.

Der Abführung des Abgasüberschusses 22 erfolgt vorzugsweise geregelt über den Füllstand des Gasspeichers 23, der über das Regelventil 24 konstant gehalten und die entsprechende Abgasmenge zur weiteren Verwendung abgeführt wird.

Die Verwendung des Abgasüberschusses 22 kann auf unterschiedlichste Weise erfolgen, wie zuvor bereits ausführlich erörtert.

## Patentansprüche

1. Verfahren zur Herstellung von Branntkalk oder Magnesia (MgO) unter Umwandlung von Carbonaten in Oxide unter Abspaltung von CO₂ in als Vertikalschachtöfen ausgebildeten Kalzinieröfen (1), in welchen kohlenstoffhaltige Brennstoffe verbrannt werden, wobei mineralische Ausgangsmaterialien thermisch behandelt werden, **dadurch gekennzeichnet, dass** im Brennstoffgemisch technischer Sauerstoff oder durch technischen Sauerstoff angereichte Luft als Oxidationsmitteln eingesetzt wird und das bei der Verbrennung in einer Brennzone (8) entstehende, CO₂ enthaltende Abgas wenigstens teilweise als Kühlgas in eine Kühlzone unterhalb der Brennzone (8) am unteren Ende des Vertikalschachtofens als Kalzinierofen (1) eingeleitet wird, wobei in der Kühlzone der Branntkalk oder das Magnesia abgekühlt wird.

2. Verfahren nach Anspruch 1, **dadurch gekennzeichnet, dass** das CO₂ enthaltende Abgas teilweise als Verdünnungsgas in das Brennstoffgemisch zurückgeführt wird.

3. Verfahren nach Anspruch 2, **dadurch gekennzeichnet, dass** die als Verdünnungsgas in das Brennstoffgemisch rückgeführte Abgasmenge über die Temperatur in der Brennzone (8) des Brennprozesses geregelt wird.

4. Verfahren nach einem der Ansprüche 2 oder 3, **dadurch gekennzeichnet, dass** die als Verdünnungsgas rückgeführte Abgasmenge in das Brennstoffgemisch vor Eintritt in die Brennzone (8) mit dem Brennstoff und/oder dem Oxidationsgas vermischt wird.

5. Verfahren nach einem der Ansprüche 1 bis 4, **dadurch gekennzeichnet, dass** die als Kühlgas rückgeführte Abgasmenge in die Kühlzone über die Temperatur des Oxides am unteren Ausgang des Vertikalschachtofens (1) geregelt wird.

6. Verfahren nach Anspruch 5, **dadurch gekennzeichnet, dass** die als Kühlgas rückgeführte Abgasmenge zusätzlich über die Abgastemperatur am oberen Ausgang des Vertikalschachtofens geregelt, und zur Überschreitung des Taupunktes im Abgas gegebenenfalls über den Kühlgasbedarf hinaus erhöht wird.

7. Verfahren nach einem der vorhergehenden Ansprüche, **dadurch gekennzeichnet, dass** das entstandene Abgas durch Eigendruck des Kalzinierofens (1) oder mit Hilfe eines Saugzuggebläses (3) durch eine Filteranlage (4) zur Abtrennung des im Abgas enthaltenen Staubanteiles gefördert wird.

8. Verfahren nach einem der vorhergehenden Ansprüche, **dadurch gekennzeichnet, dass** die Einbringung des Oxidationsgases zumindest teilweise durch Vermischung mit der als Kühlgas in die Kühlzone rückgeführten Abgasmenge zusätzlich oder alternativ zur Einbringung in die Brennzone (8) erfolgt.

9. Verfahren nach einem der vorhergehenden Ansprüche, **dadurch gekennzeichnet, dass** das entstehende Abgas zumindest teilweise aus dem Brennprozess zur alternativen Verwendung ausgeschleust wird, wobei die Ausschleusung durch direkte Entnahme aus dem Abgassystem oder vorzugsweise über einen Gasspeicherbehälter erfolgen kann.

## Claims

1. Method for producing quicklime or magnesium oxide (MgO) by converting carbonates into oxides by separating CO₂ in a calciner (1) formed as a vertical shaft furnace, in which calciner carbonaceous fuels are combusted, mineral raw materials being heat treated, **characterised in that** technical oxygen or technical oxygen-enriched air is used in the fuel mixture as an oxidising agent and the CO₂-containing waste gas arising during combustion in a combustion zone (8) is introduced at least in part as a cooling gas into a cooling zone beneath the combustion zone (8) at the lower end of the vertical shaft furnace which functions as the calciner (1), the quicklime or the magnesium oxide being cooled in the cooling zone.

2. Method according to claim 1, **characterised in that** the CO₂-containing waste gas is in part returned to the fuel mixture as a diluent gas.

3. Method according to claim 2, **characterised in that** the amount of waste gas returned to the fuel mixture as a diluent gas is regulated by means of the temperature in the combustion zone (8) of the combustion process.

4. Method according to either claim 2 or claim 3, **characterised in that** the amount of waste gas returned to the fuel mixture as a diluent gas is mixed with the fuel and/or the oxidising gas before entering the combustion zone (8).

5. Method according to any of claims 1 to 4, **characterised in that** the amount of waste gas returned to the cooling zone as a cooling gas is regulated by means of the temperature of the oxide at the lower outlet of the vertical shaft furnace (1).

6. Method according to claim 5, **characterised in that** the amount of waste gas returned as a cooling gas is in addition regulated by means of the waste gas temperature at the upper outlet of the vertical shaft furnace, and is optionally increased in excess of the cooling gas requirement so as to exceed the dew point in the waste gas.

7. Method according to any of the preceding claims, **characterised in that** the resulting waste gas is moved through a filter assembly (4) by means of the inherent pressure of the calciner (1) or using a suction fan (3) in order to separate the dust fraction contained in the waste gas.

8. Method according to any of the preceding claims, **characterised in that** the oxidising gas is introduced at least in part by being mixed with the amount of waste gas returned to the cooling zone as a cooling gas, in addition or as an alternative to being introduced into the combustion zone (8).

9. Method according to any of the preceding claims, **characterised in that** the resulting waste gas is at least in part discharged from the combustion process for an alternative use, the discharge being able to occur by means of direct removal from the waste gas system or preferably via a gas storage container.

## Revendications

1. Procédé de préparation de chaux vive ou de magnésie (MgO) par transformation de carbonates en oxyde avec dissociation de CO₂ dans un four de calcination (1) réalisé sous la forme d'un four à cuve verticale dans lequel des combustibles renfermant du carbone sont brûlés, des produits de départ minéraux étant traités thermiquement,
**caractérisé en ce que**
dans le mélange de combustibles de l'oxygène technique ou de l'air enrichi en oxygène technique est utilisé en tant qu'agent d'oxydation et les gaz d'échappement renfermant du CO₂ formés lors de la combustion dans une zone de combustion (8) sont transférés au moins partiellement en tant que gaz de refroidissement dans une zone de refroidissement située au-dessous de la zone de combustion (8) à l'extrémité inférieure du four à cuve verticale constituant le four de calcination (1), dans la zone de refroidissement, la chaux vive ou la magnésie étant refroidie.

2. Procédé conforme à la revendication 1,
**caractérisé en ce que**
les gaz d'échappement renfermant du CO₂ sont partiellement renvoyés en tant que gaz de dilution dans le mélange de combustibles.

3. Procédé conforme à la revendication 2,
**caractérisé en ce que**
la température des gaz d'échappement renvoyés en tant que gaz de dilution dans le mélange de combustibles est réglée au-dessus de la température dans la zone de combustion (8) du procédé de combustion.

4. Procédé conforme à l'une des revendications 2 et 3,
**caractérisé en ce que**
la quantité de gaz d'échappement renvoyée dans le mélange de combustibles en tant que gaz de dilution est mélangée avant l'entrée dans la zone de combustion (8) avec le combustible et/ou le gaz d'oxydation.

5. Procédé conforme à l'une des revendications 1 à 4,
**caractérisé en ce que**
la température des gaz d'échappement renvoyés en tant que gaz de refroidissement dans la zone de refroidissement est réglée au-dessus de la température de l'oxyde au niveau de la sortie inférieure du four à cuve verticale (1).

6. Procédé conforme à la revendication 5,
**caractérisé en ce que**
la température des gaz d'échappement renvoyés en tant que gaz de refroidissement est en outre réglée au-dessus de la température des gaz d'échappement au niveau de la sortie supérieure du four à cuve verticale, et la quantité de ces gaz d'échappement est le cas échéant augmentée pour dépasser le point de rosée dans ceux-ci au-dessus de la demande en gaz de refroidissement.

7. Procédé conforme à l'une des revendications précédentes,
**caractérisé en ce que**
les gaz d'échappement formés sont refoulés par la pression propre du gaz de calcination (1) ou à l'aide d'un ventilateur de tirage par aspiration (3) au travers d'une installation de filtration (4) pour permettre de séparer les particules de poussière renfermées dans ces gaz d'échappement.

8. Procédé conforme à l'une des revendications précédentes,
**caractérisé en ce que**
l'introduction du gaz d'oxydation est effectuée au moins partiellement en plus ou en variante de l'introduction dans la zone de combustion (8) par mélange avec la quantité de gaz d'échappement renvoyée dans la zone de refroidissement.

9. Procédé conforme à l'une des revendications précédentes,
**caractérisé en ce que**
les gaz d'échappement formés sont éclusés au moins partiellement hors du processus de combustion pour permettre leur utilisation alternative, l'éclusage pouvant être effectué par soutirage direct hors du système de gaz d'échappement ou de préférence par l'intermédiaire d'un réceptacle accumulateur de gaz.
